# EUROPEAN PATENT APPLICATION

(11) **EP 1 887 513 A2**
(43) Date of publication of application: **13.02.2008**
(21) Application number: 07015587.4
(22) Date of filing: 08.08.2007
(51) Int. Cl.: G06T 1/00

(54) **Digital watermarking for geospatial images**

(30) Priority: 08.08.2006 US 836466 P
(71) Applicant: GCS Research LLC, Missoula MT 59802 (US)
(72) Inventor: Philp, J. Alexander, Missoula Montana 59802 (US); Beltz, Michael W., Missoula Montana 59802 (US); Waterman, John R., West Burke Vermont 05871 (US); Lofgren, Neil E., White Salmon Washington 98672 (US)
(74) Representative: Lotti, Giorgio

(57) **Abstract**

A geographic information system digitally watermarks by modifying pixels from a source image with additional spatial and non-spatial information for a destination image. When an image is digitally watermarked, the pixels of the image are modified to include an embedded redundant pattern that is imperceptible to viewers of the image. The redundant pattern of changes from the "digital watermark" can be converted back into a payload containing meaningful data, and in some examples into unique identifiers. The payload is arranged to link the image to additional information such as copyright information, geospatial data, and related applications and services. Since the payload is embedded within the pixels of the image, no additional storage space is required, and the information is arranged to survive various image manipulations that might be employed by a user such as: translation of image formats, rotation, scaling, cropping, printing and scanning,'and many other image processes.

## Description

### RELATED APPLICATION

This utility patent application claims the benefit under 35 United States Code § 119(e) of United States Provisional Patent Application No. 60/836,466 filed on August 8, 2006, which is hereby incorporated by reference in its entirety.

### FIELD OF THE INVENTION

The present disclosure generally relates to digital watermarking of digital images for use in geospatial applications. More particularly, the described digital watermarking methods modify pixels from the source image to provide a redundant pattern that is embedded in the destination image while remaining imperceptible to the viewer of the destination image. Digital watermarking embedding and reading processes are integrated at key points of the system depending on workflow to enable a variety of enhancements to the applications and uses of geospatial imagery. These applications range from synchronization of metadata on airborne platforms to in-line process management and tracking of data from on-demand image services to enhancement of user management and sharing of geospatial information.

### BACKGROUND

Digital watermarking involves altering the pixels of an image to embed data in a repeating pattern, using a small shift in the bits of data represented by the pixels. Digital watermarks are imperceptible to the human eye and are often hidden in image noise to obscure the data shift. The watermark is retained through various processing of the image, such as cropping, rotating, printing and rescanning. Digital watermarks can be read by technology programmed to perceive the patterns and retrieve the embedded data. In the past, digital watermarks have been used primarily to deter counterfeiting of printed financial and identification documents; and to identify copyright ownership for digital media including photographs, music, and movies.

Emerging in the mid-1960s into the early-1970s, Geographic Information Systems (GIS) has evolved as both a science and technology platform. Conceived by academic departments associated with landscape planning, design, and analysis, as well as discipline of geography, GIS is reducible to a computer system(s) designed to allow users to collect, manage, analyze, and visualize large volume of spatially referenced information and associated attribute data. Attributes are information that is present in a database table structure and linked relationally to particular data types that are stored as either vector or raster elements. Vector data is comprised of data values that are derived in the form of point, lines, and polygons, and raster data is defined as data dealing with pixel-picture values. A pixel is a picture element represented in varying color assignments to the value inherent to pixel unit. Pixels are usually defined in square units and have a spatial dimension in terms of size dimensions, e.g., a pixel might be 30 meters x 30 meters in dimension. GIS should not be considered coincident to GIS software applications, since there are a multiplicity of GIS software applications that allow users to conduct GIS workflows to meet their particular needs. Invariably, every significant GIS software application encapsulates the fundamental nature of GIS generically.

Generally, a GIS is based upon a relational database (RDBMS) wherein spatial information about a particular feature (vector and/or raster) is stored, edited, and managed. GIS also provides a series of outputs, i.e., paper maps, digital files, and/or web-based applications and services, which represent the convergence with mainstream information technology practices. Certain definitions will focus upon the nature of geospatial metadata, which is data about the spatial data (vector and/or raster data), and the unique nature of the attribute information that helps describe both spatially and non-spatially the characteristics of the vector or raster data features that are maintained either as single file groupings or in the relational database environment. At the core of the table structure associated with the vector or raster features are attribute tables that contain relevant information that allows for layering, contextual analysis, query, and GIS analysis of complex relationship between vector and raster data overlays. The layering capability of a GIS, both in terms of visual representation and database joins, is one of the true advantages of utilizing a GIS and spatially-enabling databases. Moreover, it is estimated that approximately 80-90% of all data in existence contains some spatial component. This is often described as the "where" or the "what" being analyzed and/or visualized via computer monitors or displayed graphically on paper outputs in a post-analysis output event.

Since the mid-1990s, GIS and the Internet have converged to the point where GIS data elements and functions are being distributed across web-based protocols and systems. Now, GIS functionality is being exposed across Intranets and Internets utilizing server-side functionality and a standards-based approach for producing and consuming geospatial web services, which utilize a variety of Internet protocols and development languages. Simultaneously, a typical GIS has migrated from single-user, workstation-intensive frameworks to server-centric, enterprise solutions where-in multiple individuals within an organization are now involved in utilizing the GIS to solve a variety of business processes. These processes may or may not involve traditional cartographic presentation of GIS analysis and are increasingly focusing upon geospatial web services and functions using a standards-based approach for sharing geospatial content and functions across enterprise networks.

### BRIEF SUMMARY OF THE INVENTION

In accordance with the present invention, shortcomings and problems in prior systems are solved by a system and process that digitally watermarks images by modifying pixels from the source image and embedding a payload in the image that includes pertinent geospatial image data. The payload can later be extracted from the digitally watermarked image and converted into meaningful data. The payload can be divided into a number of meaningful values and in some examples will include unique identifiers. The unique identifiers are arranged to link the image to additional information such as copyright information, geospatial reference information, associated data, and related applications and services. Since the payload is embedded within the pixels of the image, no additional storage space is required, and the information is arranged to survive various image manipulations that might be employed by a user such as: translation of image formats, rotation, scaling, cropping, printing and scanning, and many other image processes.

In one example, a method is related to a geographic information system to process source image data associated with geospatial information to generate and manage digitally watermarked image data. The example method comprises: capturing the source image data with an image capture platform; generating geospatial metadata with the image capture platform based on the geospatial information associated with the source image data; formatting the geospatial metadata into a variable payload with the image capture platform; digitally watermarking the source image data with the variable payload to generate digitally watermarked image data with the image capture platform; and transmitting the digitally watermarked image data and the geospatial metadata from the image capture platform to an image processing center, wherein the image processing center is arranged to: extract the variable payload from digitally watermarked image data, process the metadata, and publish metadata and links to additional data in association with the digitally watermarked image data in a watermark registry database such that one or more client applications can access the database.

In another example, a method is related to a geographic information system to process source image data associated with geospatial information to generate and manage digitally watermarked destination image data, the method comprising: receiving the source image data from an image capture platform with the image processing center; receiving geospatial metadata from the image capture platform with the image processing center, wherein the geospatial metadata is based on the geospatial information associated with the source image data; formatting the geospatial metadata into a variable payload with the image processing center; digitally watermarking the source image data with the variable payload to generate digitally watermarked image data with the image processing center; generating scripted metadata and links to additional data with the image processing center, based on the received geospatial metadata and the variable payload; publishing the scripted metadata and links to additional data in association with the digitally watermarked image data in a watermark registry database such that one or more client applications can access the database; and transmitting the digitally watermarked image data from the image processing center to a client system through a distribution system, wherein the client system is arranged to: extract the variable payload from digitally watermarked image data, retrieve the scripted metadata and links to additional data in association with the digitally watermarked image data, and execute an operation selected by a user based on either the metadata or the links to additional data.

In a further example a mosaic image is created as a combination of processed images. The example method includes: accessing each of a plurality of captured images with the image processing center; selecting a variable payload format for each accessed captured image with the image processing center based on an intended use for the accessed, image; generating a variable payload with the image processing center based on geospatial metadata associated with each accessed image; digitally watermarking each accessed image with the variable payload to generate digitally watermarked image data with the image processing center; publishing the metadata and links to additional data in association with each digitally watermarked image in a watermark registry database such that one or more client applications can access the database; combining digitally watermarked images into a mosaic image; and transmitting the mosaic image from the image processing center to a client system through a distribution system, wherein the client system is arranged to: scan entire mosaic image to extract variable payloads, retrieve the metadata and links to additional data in association with each digitally watermarked region of the mosaic image, generate thematic layers based on payload fields in detected watermark regions, and execute an operation selected by a user based on either the metadata or the links to additional data.

In still another example, a method is related to a method for a geographic information system to process source image data associated with geospatial information to generate watermarked image data, the method comprising: receiving the source image data from a distribution system with a client system; extracting geospatial metadata from the source image data with the client system; receiving user specified data from a user with the client system; formatting the geospatial metadata and the user specified data into a payload with the client system; digitally watermarking the source image data with the payload to generate digitally watermarked image data with the client system; generating registry metadata from the digitally watermarked image data and the payload with the client system; publishing the registry metadata in a watermark registry database with the client system; and transmitting the digitally watermarked image data for client-side image storage and distribution.

The presently disclosed invention may be implemented as a process or method that is integrated into an image capture platform, a process that is integrated into an image processing system, a process that is integrated into a client system or as a combination of processes that are integrated and/or distributed across multiple systems. The process can be provided in the form of machine executable instructions and other data constructs that can be provided to a processor such as a microprocessor, a specially designed circuit that processes such instructions, or any other reasonable processing means. The described processes can be provided in the form of a computer program product that is provided as a tangible computer storage media that is readable by a computer system. In some instances, the computer program product can be provided as a propagated signal on a carrier readable by a computing system and encoding a computer program of instructions for executing a computer process.

These and various other features, as well as advantages, which characterize the present invention, will be apparent from a reading of the following detailed description and a review of the associated drawings.

### BRIEF DESCRIPTION OF THE DRAWINGS.

Non-limiting and non-exhaustive embodiments are described with reference to the following drawings, arranged in accordance with aspects of the present disclosure:
FIG. 1A is a system diagram illustrating an example geographic information system;
FIG. 1B is a system detail diagram illustrating where detailed processes fit into the geographic information system outlined in 1A;
FIG. 2A is a signal flow diagram illustrating example signal paths through the Image Capture block of the system diagram that includes on-board digital watermarking;
FIG. 2B is a signal flow diagram illustrating addition example signal paths through the Image Capture block of the system diagram where on-board watermarking does not occur;
FIG. 3A is a signal flow diagram illustrating example signal paths through the Ground Station and/or Image Processing Center block of the system diagram, where input imagery is already watermarked ;
FIG. 3B is a signal flow diagram illustrating additional example signal paths through the Ground Station and/or Image Processing Center block of the system diagram, where unmarked input imagery is watermarked in a scripted in-line process;
FIG. 3C is signal flow diagram illustrating still further example signal paths through the Ground Station and/or Image Processing Center block of the system diagram, where unmarked input imagery is watermarked in an on-demand image service;
FIG. 4 is a signal flow diagram illustrating example signal paths through the Watermark Registry Database(s) block of the system diagram, where metadata and reference links are published and retrieved;
FIG. 5 is a signal flow diagram illustrating example signal paths through the Image Distribution block of the system diagram, where both marked and unmarked imagery is distributed to client systems;
FIG. 6A is a signal flow diagram illustrating example signal paths through the Client Systems block of the system diagram, where input imagery is already watermarked, and the user is able to read the watermark and add and retrieve data from the registry;
FIG. 6B is a signal flow diagram illustrating additional example signal paths through the Client Systems block of the system diagram, where input imagery is not watermarked, and the user is able to add a watermark and publish data to the registry;
FIG. 7 is a process flow diagram (700) illustrating a geospatial digital watermarking workflow;
FIG. 8 is an example payload format including some example owner flags;
FIG. 9A is a graphical diagram for an example schema for an example watermark registry;
FIGS. 9B - 9C are example XML files for image metadata; and
FIG. 10 is an example XML file for link metadata, arranged in accordance with at least some embodiments of the present disclosure.

### DETAILED DESCRIPTION

Various embodiments will be described in detail with reference to the drawings, where like reference numerals represent like parts and assemblies throughout the several views. Reference to various embodiments does not limit the scope of the invention, which is limited only by the scope of the claims attached hereto. Additionally, any examples set forth in this specification are not intended to be limiting and merely set forth some of the many possible embodiments for the claimed invention.

Although described here in the context of geospatial images, it will be apparent that the teachings of the application have equal applicability to any other digital images, such as digital images of people, digital images of animals, digital astronomical images, digital electron microscopy images, and the like. The use of geospatial images is for illustrative purposes only to simplify the following discussion, and may be used interchangeably with "digital images" or "electronic image files".

Briefly stated, the present disclosure generally relates to a geographic information system that digital watermarks by modifying pixels from the source image. When an image is digitally watermarked, the pixels of the image are modified to include an embedded redundant pattern that is imperceptible to viewers of the image. The redundant pattern of changes from the "digital watermark" can be converted back into meaningful data, referred to as the payload. The payload can be divided into a number of meaningful values and in some examples will include unique identifiers. The unique identifiers are arranged to link the image to additional information such as copyright information, geospatial reference information, associated data, and related applications and services. Since the payload is embedded within the pixels of the image, no additional storage space is required, and the information is arranged to survive various image manipulations that might be employed by a user such as: translation of image formats, rotation, scaling, cropping, printing and scanning, and many other image processes.

Example tools and processes that utilize digital watermarks within a geographic information system include products manufactured by GCS Research of Missoula, MT, including such products as: GeoMarc Desktop^{™}, GeoMarc Server^{™}, and GeoMarc OnDemand^{™}. GeoMarc® is a registered trademark of the Digimarc Corporation of Beaverton, OR.

The described digital watermarking process can be implemented as hardware, software, and/or a combination thereof. In some examples, the digital watermarking process is integrated into an airborne system for generating images such as in a satellite imaging system or a high altitude imaging system that may be onboard an aircraft. In other examples, the digital watermarking process is a remote process that manages images after they are created by a separate system.

The described digital watermarking methods can provide the ability to track the distribution of geospatial images through the embedded digital watermark. The identity of the creator or owner of the image can be verified by extracting information from the digital watermark. User restrictions can also be embedded in the digital watermark so that some users are blocked from access or have limited access to the image (e.g., a portion of the image is masked) while other users have unlimited access to the image. Additionally, information providers can have enhanced delivery of products to their customers in a secure and timely manner, while empowering end users the ability to re-connect to original data and related services.

The described system can include a watermark registry to record information that is related to each image such as image properties, metadata, documents, websites, images, geospatial layers, reference links and services and many other types of data. The registry can be implemented in a number of ways including but not limited to a file system, a set of XML documents, or a relational database management system (RDBMS) with or without a spatial data engine. For the purposes of this disclosure, descriptions will focus on relational database manifestations of the watermark registries. The system operates on a distributed architecture so that a single central registry is not required. Each workflow can employ one or more registries specific to that usage. A single user or automated system can connect to a large number of watermark registries, publishing data to one or more of the registries depending on workflow specific rules or processes. Data can be replicated from one watermark registry to another in order to transfer data to a disconnected network or user or to filter data and restrict dissemination to certain audiences. Watermark registry services can also be employed to expose registry data to a larger audience, for example: a watermark registry can be posted as an internet or intranet web service. Client and server tools can be configured to allow connections to one or many watermark registries either directly or through a watermark registry service. Rules can be employed to set priorities of registries so that duplicate entries will be weighted to determine which version should be presented to users. Registry connections can allow full access (reading and publishing records) or can be read-only, or can require secured login to enable different levels of access.

Data in a watermark registry can be referenced to each watermarked image using some or all of the data values in the watermark payload as a unique identifier for that image. In some examples, users can publish related data and reference links for an image using server or desktop tools that automate some or all of the data aggregation and formatting. Registry reference links can include but are not limited to links to documents, websites, geospatial data, and web services. Each type of link may have a number of actions that can be performed by the client system that retrieves the link from the watermark registry. If the client application supports the action, it will allow the user to retrieve the linked data and perform the action. If the linked data is a service, the action will involve launching or connecting to the service and sending some parameters to the service when needed. An example service could take the capture date and location of the originating image and search an image archive for updates that might be available to replace the image

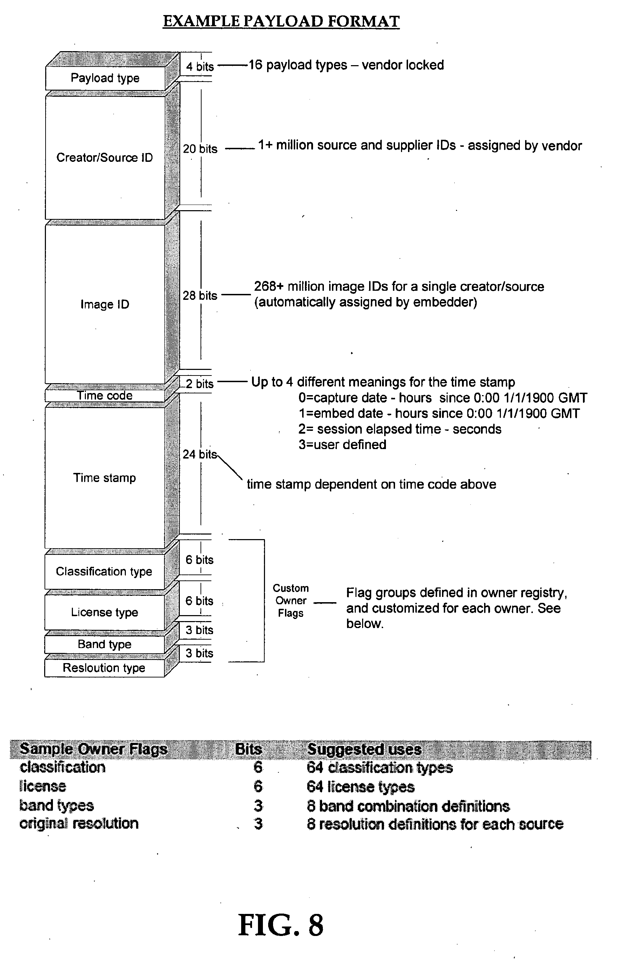

The described digital watermarking methods can allow the watermark payload definition (e.g., see FIG. 8 for an example payload format including some example owner flags) to be customized to meet the needs of different applications or users. In some examples, a small portion of the watermark payload will define the length and/or makeup of the remainder of the watermark payload. In other examples, a portion of the watermark payload can be variably defined based on cross referencing a data definition in the watermark registry. The data definition can be referenced to other potions of the watermark payload such as those that identify the owner or source of the data. In this way, each owner can specify the definition of a portion of the payload to meet their specific application needs. For example: one owner may choose to identify security classifications and/or license restrictions for the imagery using this portion of the payload while another customer chooses to identify their user information and imagery source identities.

The described methods provide a means of identifying portions of a mosaic image where the full image extent is made up of a number of constituent images. Each constituent image can be watermarked separately using payload values to identify specific properties of the individual images such as location, extent, source, owner, date of capture, date of embedding, and other values. Additional related information can be stored in the watermark registry and associated with specific regions of the mosaic parent image. Original watermark vales will be preserved into the mosaic image so that the image can be scanned to find the values in each region of the image. By thoroughly scanning all or a portion of the mosaic image, a map can be created to show the extent of each watermarked region within the image. This image map can be thematically displayed by using colors or other means to represent the unique values within the watermarked portions of the image. The resulting thematic map can be overlaid as layers in the image (e.g., GIS-based layers) using transparencies and other means to show the relationship of watermark values to specific areas of the image. For example, a portion of the watermark payload can be used to identify the capture date of the original images. When these images are combined in a mosaic, the watermark scanning processes can map out unique watermark payload regions in the image and create thematic layers based on values within the payload; for example, a thematic temporal layer can be created using colors to illustrate the age of different regions of the image. Users of this tool can query a specific location in the image to find out its age or automatically select entire regions of the image to replace with newer imagery.

Thematic representations of key attribute information can be stored in the raw payload and/or retrieved from the watermark registry database. Thematic displays include key data attributes that can be presented as additional spatial "layers" within a GIS software application and can assist in additional GIS analysis. Thematic displays can provide a way of visualizing key attribute information from the geospatial image such as time, location, and/or any other data value maintained in the attribute table that has been associated with the watermark payload and/or the watermark registry database (e.g., RDBMS) where the attribute information is stored.

The described digital watermarking methods can provide the ability to track spatial changes to an image such as rotation, scaling, and cropping. In order to synchronize the watermark reader with the watermark signal in the image, the image is analyzed to determine whether the watermark signal has been changed or reoriented in one or more of the ways described above. Once the synchronization step is complete, the watermark can be read from the image, and the orientation data can be reported as an output of the read process. This orientation data can be used to determine spatial alterations that have been performed on the image data so that related geospatial metadata can be re-registered to apply properly to the new image. Additionally, by using portions of the watermark payload to hold relative cell locations for each image block within the original image, macro and micro location adjustments can be made to further align and georeference the pixels within the altered image to the original geospatial metadata. Said metadata can in some examples be stored in the watermark registry along with additional descriptive image information so that this data can be retrieved when the watermark is read and used to assist in alignment of the altered image.

The described digital watermarking methods can provide the ability to adjust the resolution at which a watermark is embedded in an image, so that each calculated watermark cell does not necessarily have to correspond to a single pixel in the image. In some cases, a watermark may be embedded at a lower resolution so that each watermark cell could map to some larger block of image pixels. This method of watermark embedding can afford added resilience and robustness to the watermark in cases where an image might be converted to a lower resolution using some resampling method such as bi-cubic interpolation or any other resampling methodology that might be desirable.
Since geospatial images are often extremely large and can be captured at resolutions higher than one half meter per pixel, it is often the case that images will be down-sampled to depict a larger region using a smaller amount of disk and memory resources. In these cases, a lower resolution watermark will have a better chance of survival to allow the resulting image to continue to carry the watermark payload. In other cases, it may be desirable to embed watermarks at two or more resolutions within the same image. This practice will allow a high resolution mark to be employed to afford survival in small, high-resolution cropped image pieces; while a lower resolution watermarks can be used to allow survival in down-sampled regions of the image.

### Example Geographic Information System

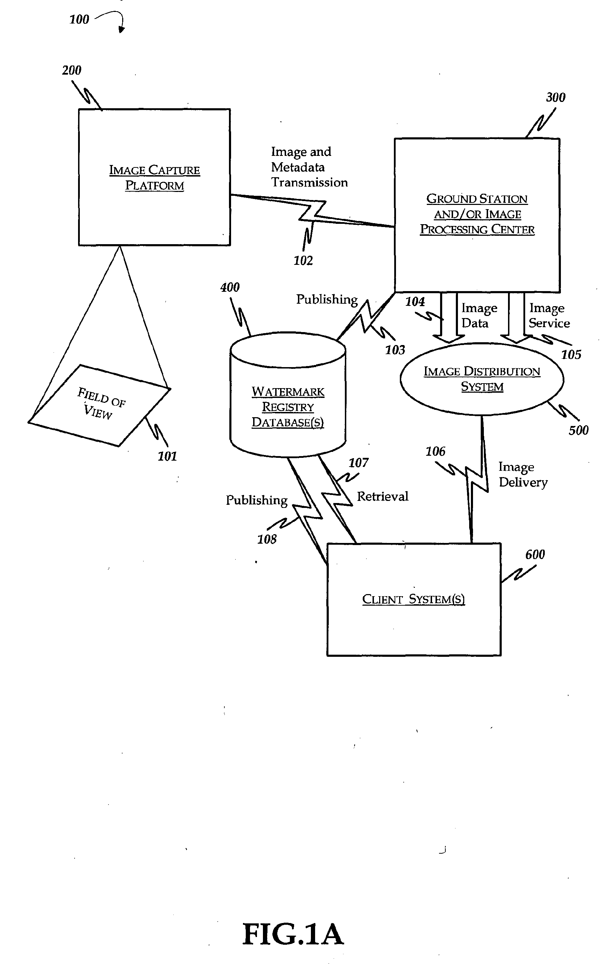

FIG. 1A is a system diagram illustrating an example geographic information system (100) that is arranged in accordance with at least some aspects of the present disclosure. The geographic information system (100) includes an image capture platform (200), a ground station and/or image processing center (300), watermark registry database(s) (400), an image distribution system (500) and client system(s) (600).

The image capture platform (200) includes an output that is coupled to an input of the image ground station and/or processing center (300). The image processing center (300) is arranged in communication with the watermark registry database (400) and the image distribution system (500). Both the watermark registry database(s) (400) and the image distribution system (500) are also in communication with one or more client systems (600).

In operation, the image capture device (600) is arranged to capture an image from a scene that is located within a field of view (101). The image capture platform (200) may or may not add a digital watermark to the generated source image. This image along with the capture platform metadata (102) is sent to the ground station and image processing center (300) via a transmission (e.g., wired or wirelessly transmitted). The processing center (300) may add a watermark to the image and/or publish related information about the image (103) into one or more watermark registry databases (400). The processing center (300) generates either an image file (104) or an image service (105) that is distributed or delivered (500) as image data output (106) via a communication to one or more client systems (600). Image distribution (500) can communicate through a network such as, for example, through a network router, or by other means such as physical media (CDs, DVDs, tapes, etc.). Images that are watermarked (i.e., image data output 106) can be read by the client systems (600) in order to identify and process the payload information. Client systems (600) may connect to one or more watermark registry databases (400) in order to retrieve information that is related to a watermarked image, or to add more metadata and reference links into the watermark registry database. Images that are not watermarked before arriving at a client can be watermarked using tools in a client application. The resulting watermarked images can then be distributed to other client users (600) for further analysis and exploitation. Data related to a watermarked image can be published (108) to the watermark registry database (400), or retrieved (107) from the watermark registry database (400).

The source images (102) from the image capture platform (200) can be provided in the form of static images or as a series of images from a video feed. Example images can form any other variety of raster imaging system including but not limited to: sound-wave generated images, radio-wave generated images, heat-sensor generated images, visible-light generated images, non-visible-light generated images, and RADAR or LIDAR generated images. In one example, an infra-red imaging system is arranged to generate' a thermal image. In another example, a night-vision system is arranged to generate images at night-time. In another example, a LIDAR system is arranged to generate a digital surface model of an area. The image capture platform (200) can be space-based,such as a satellite, or it can be aerial or terrestrial.

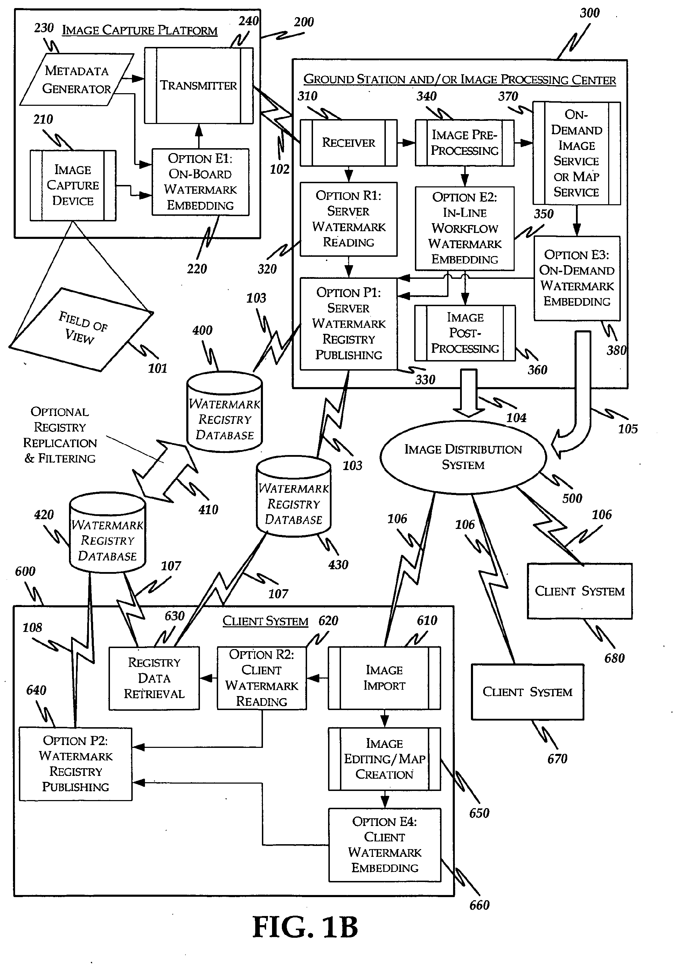

FIG. 1B shows the same system diagram as in 1A, but with additional details illustrated for each block. The image capture platform (200) includes an image capture device (210), an optional watermark embedding block (220), a metadata generator (230), and a transmitter (240). The image processing center (300) includes a receiver (310), a watermark reading block (320), a watermark publishing block (330), an image pre-processing operation (340), an in-line workflow watermark embedding block (350), an image post-processing operation (360), an on-demand image service or map service operation (370), and an on-demand watermark embedding block (380). The watermark registry database section includes a number of registry databases (400, 420, 430) along with optional processes for replication and filtering of the data (410). The client system can include any number of clients (600, 670, and 680). For the purposes of this diagram, one client is expanded to show detailed components, but all clients could have similar capabilities. The client (600) contains an image import process (610), a watermark reading block (620), a watermark registry data retrieval block (630), a watermark registry data publishing block (640), an image editing and/or map creation process (650), and a watermark embedding block (660).

Within the image capture platform (200), the image capture device (210) takes the image signal input (101) and outputs a digital image to the watermark embedding block (220). The watermark embedding block (220) also takes input from the metadata generator (230), and sends its output to an input of the transmitter (240). The transmitter (240) also takes input from the metadata generator (230). The output of the transmitter (240) is coupled to the input of the receiver (310) in the ground station (300).

The ground station and/or processing center (300) receiver (310) outputs image data either to the watermark reading block (320) or to the image pre-processing operation (340). The watermark reading block (320) output is connected to the watermark registry publishing block (330) which connects to a number of watermark registry databases (400, 430). In this example, one of the watermark registry databases (400) communicates with another database (420) through a replication and filtering process (410). The image pre-processing center (340) output connects to either the in-line workflow watermark embedding block (350) or to the on-demand image service or map service (370). The in-line embedding block (350) outputs to both the image post-processing operation (360) and to the watermark registry publishing block (330). The image post-processing operation (360) connects to the image distribution system (500). The image service or map service (370) connects to the on-demand watermark embedding block (380) which outputs to both the image distribution system (500) and the watermark registry publishing block (330).

Within the client system (600), the image import process (610) communicates with the image distribution system (500) and outputs to either the client watermark reading block (620) or the image editing and map creation process (650). The watermark reading operation (620) outputs to the registry data retrieval block (630) and to the watermark registry publishing block (640), both of which communicate with the watermark registry databases (420 and 430). The image editing and map creation process (650) outputs to the client watermark embedding block (660) which connects to the watermark registry publishing block (640).

### Example Signal Flow

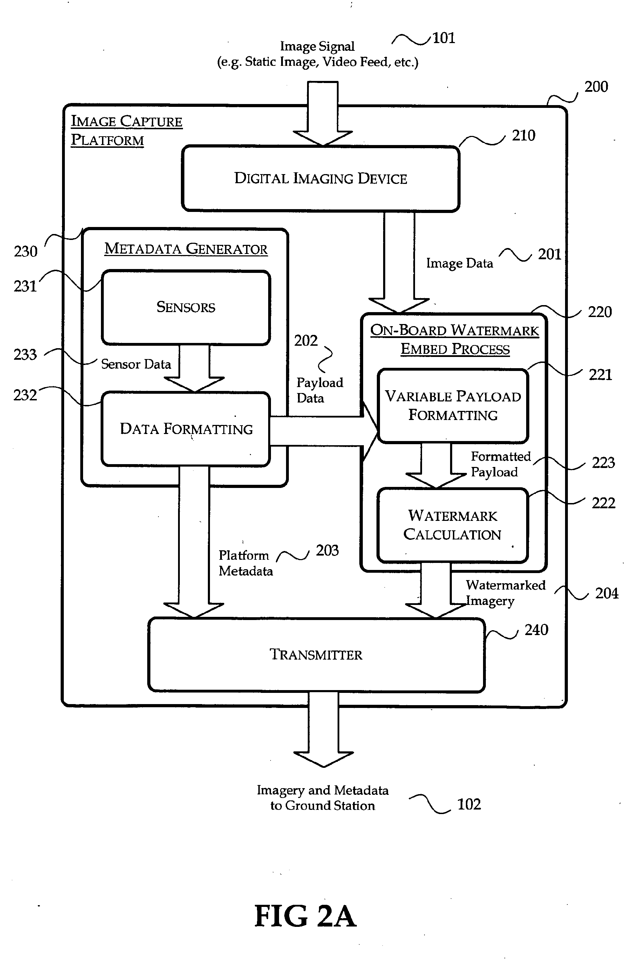

FIG. 2A diagrams an example signal flow for the image capture platform (200) where images are captured and an on-board watermark is added to the image. Within this block, the image signal (101) is captured by the digital imaging device (210) and passed (201) to the on-board watermark embed process (220). Meanwhile, on-board sensors (231) are collecting real-time metadata related to the imaging platform such as date, time, location, direction and speed of travel, field of view, type of image data collected, height, and width. The sensor data (233) is formatted (232) and passed to both the on-board embed process (220) and the transmitter (240). Within the on-board watermark embed process (220), the payload data (202) from the metadata generator (230) is combined with source and image identifiers in a variable payload formatting process (221). This process determines the type of payload to embed based on system configurations and the amount of data available. The formatted payload (223) passed to the watermark calculation process (222) where the digital watermark is applied to the image data (201). The watermarked image (204) is output to the transmitter (240) which transmits the marked imagery and metadata (102) to a ground station or other image processing center.

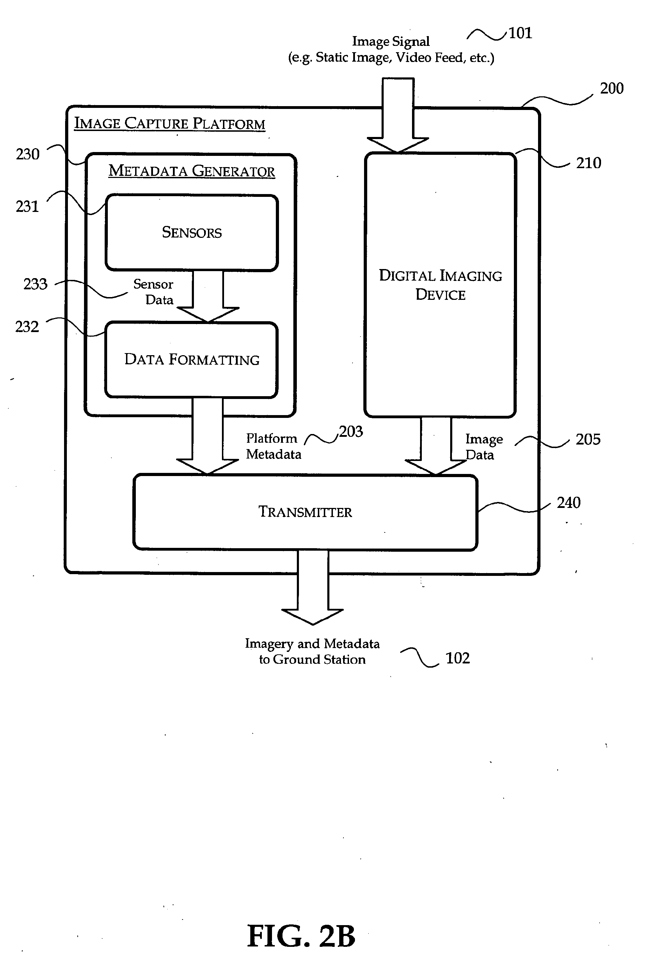

FIG. 2B diagrams an optional signal flow for the image capture platform (200) where captured images are transmitted to the ground station (300) without a watermark. This option is used in scenarios where images are watermarked in the image processing center (300) or the client system (600). In this figure, the digital imaging device (210) outputs image data directly to the transmitter (240). The metadata generator behaves as in FIG. 2A: on-board sensors (231) output data (233) to a data formatting process (232) that outputs formatted metadata (203) to the transmitter (240). The transmitter outputs image data and metadata to the ground station (300).

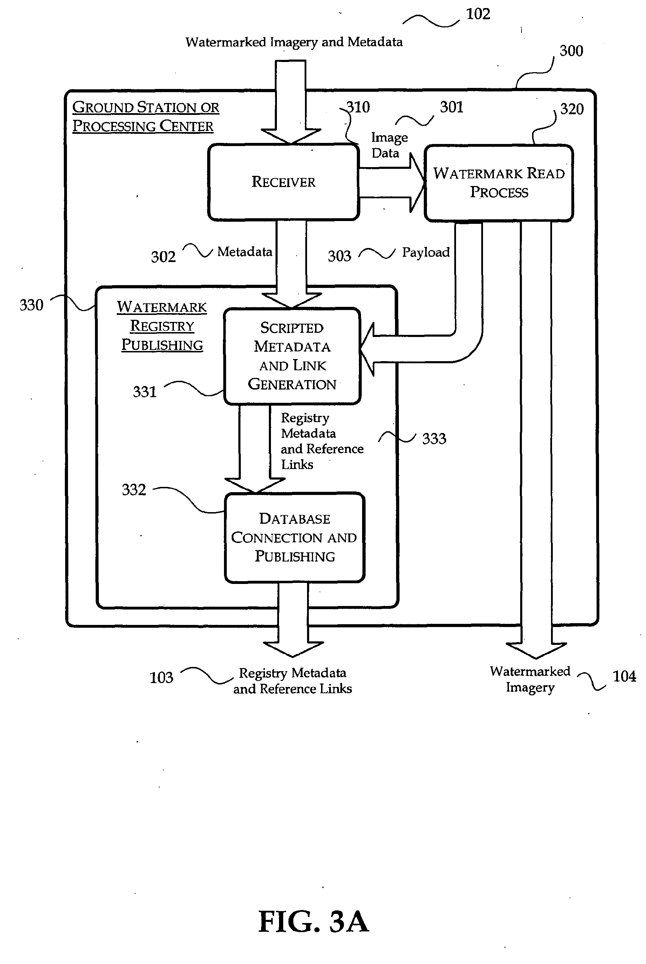

FIG. 3A provides an example signal flow through the ground station and processing center (300) for the case where the input imagery (102) is watermarked. In this case, the receiver (310) passes the image data (301) to the watermark read process (320) which determines the watermark payload (303) and passes the imagery on (104) to the distribution system (500). An optional watermark registry publishing block (330) combines metadata (302) from the receiver (310) with the payload (303) in a scripted metadata and link generation process (331). This process outputs formatted metadata and reference links (333) to the database connection and publishing process (332) which publishes the metadata and reference links to the watermark registry (400).

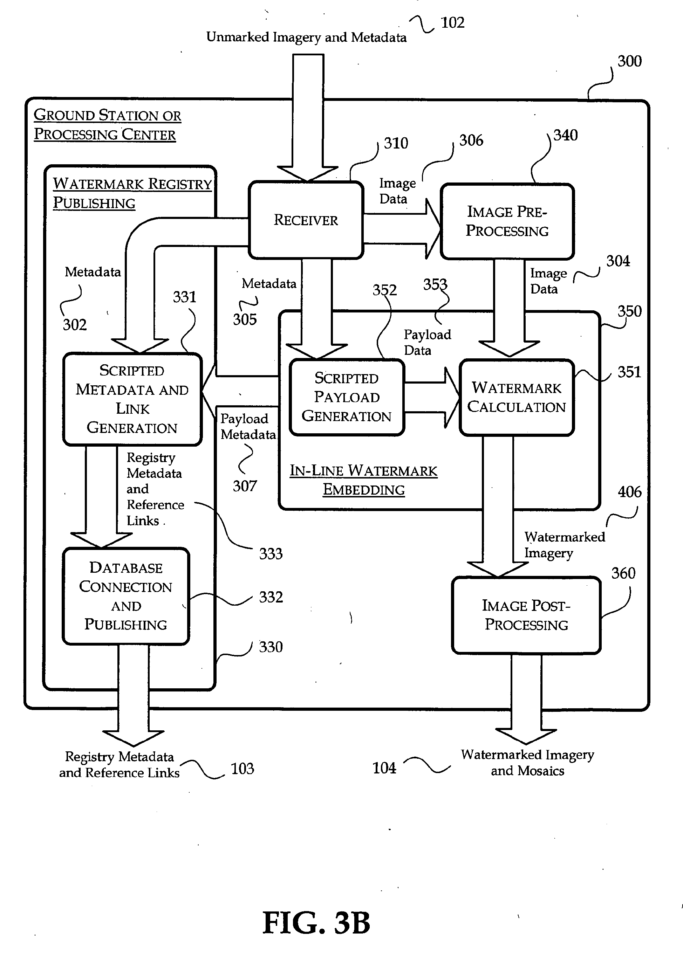

FIG. 3B provides a second signal flow through the ground station and processing center (300) for the case where unmarked imagery (102) is input and an in-line watermark embedding process (350) is integrated into an automated image processing system. In this case, the receiver (310) outputs image data (306) to a set of optional image pre-processing operations (340). These operations could include steps such as orthorectification and color balancing, or many other imagery processes. The output imagery (304) is fed to the in-line watermark embedding block (350) where a scripted payload generator (352) receives metadata from the receiver (310) and outputs payload data (353) to the watermark calculation process (351). This process applies the watermark to the imagery and outputs it (406) to a set of optional image post-processing operations (360) which output the final imagery (104) to the image distribution system500). Post-processing operations could include many steps such as mosaic stitching, compression, and file formatting. An optional watermark registry publishing process (330) takes metadata (334) from the receiver (310) and combines it with payload data (307) from the watermark embed process (350) into a scripted metadata and link generation process (331). This process outputs formatted metadata and reference links (333) to a database connection and publishing process (332) which publishes the metadata and reference links to the watermark registry (400).

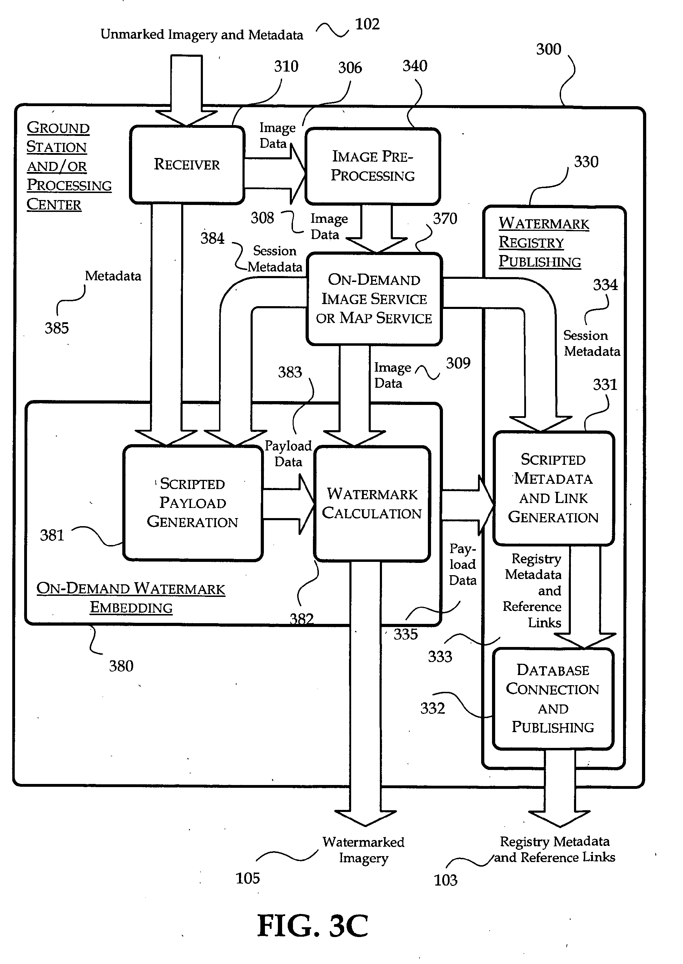

FIG. 3C provides a third signal flow through the ground station and processing center (300) for the case where unmarked imagery (102) is input and an on-demand watermark embedding process (380) is integrated into the output of an image or map service (370). In this case, the receiver (310) outputs image data (306) to a set of optional image pre-processing operations (340). These operations could include steps such as orthorectification and color balancing, or many other imagery processes. The output imagery (308) is fed to an on-demand image service or map service (370). This service delivers imagery to users based on specific requests. In one example, a user interfaces to a map through an Internet web browser and new images are sent each time the user zooms or pans his view of the map or changes the visible layers. It is customary for this type of image server to track and log session information related to the user. The output image data (309) from this service is fed into an on-demand watermark embedding block (380) where a scripted payload generator (381) receives metadata (385) from the receiver (310) and session data from the image service (370) and outputs payload data (383) to the watermark calculation process (382). This process applies the watermark to the imagery and outputs it (105) to the image distribution system (500). An optional watermark registry publishing process (330) takes session metadata (334) from the image service (370) and combines it with payload data (335) from the watermark embed process (380) into a scripted metadata and link generation process (331). This process outputs formatted metadata and reference links (333) to a database connection and publishing process (332) which publishes the metadata and reference links (103) to the watermark registry (400).

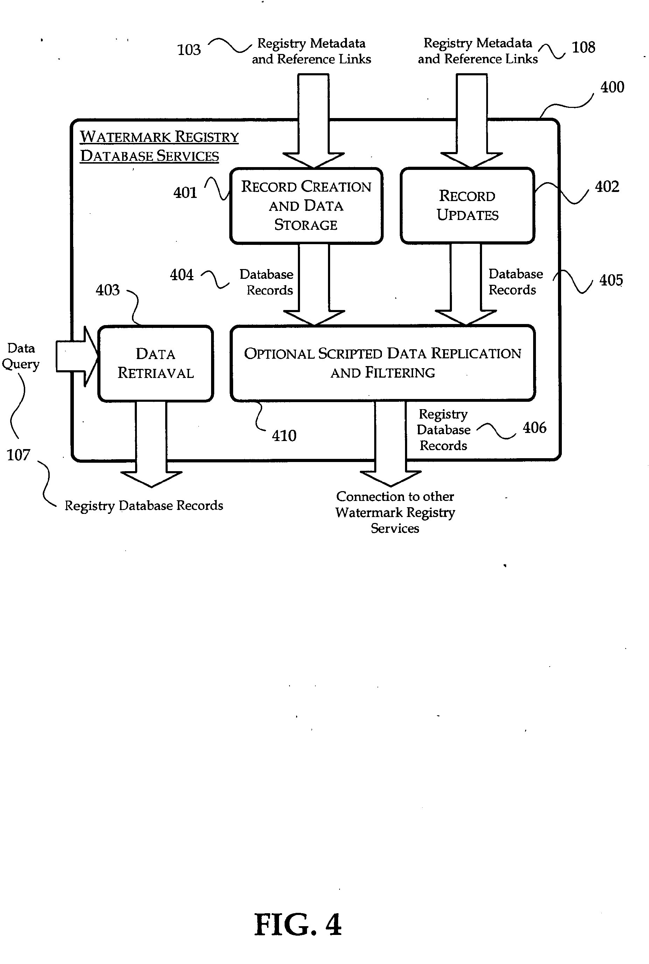

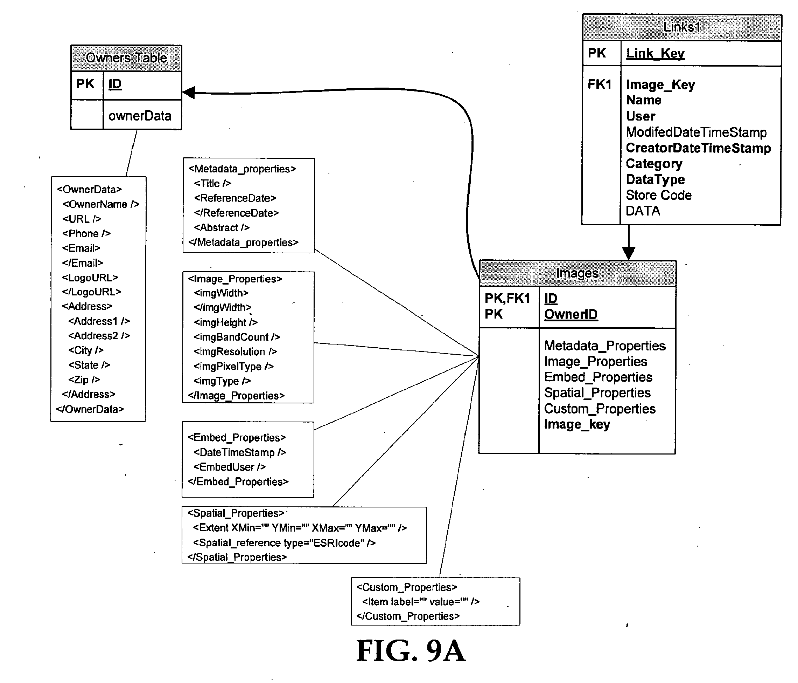

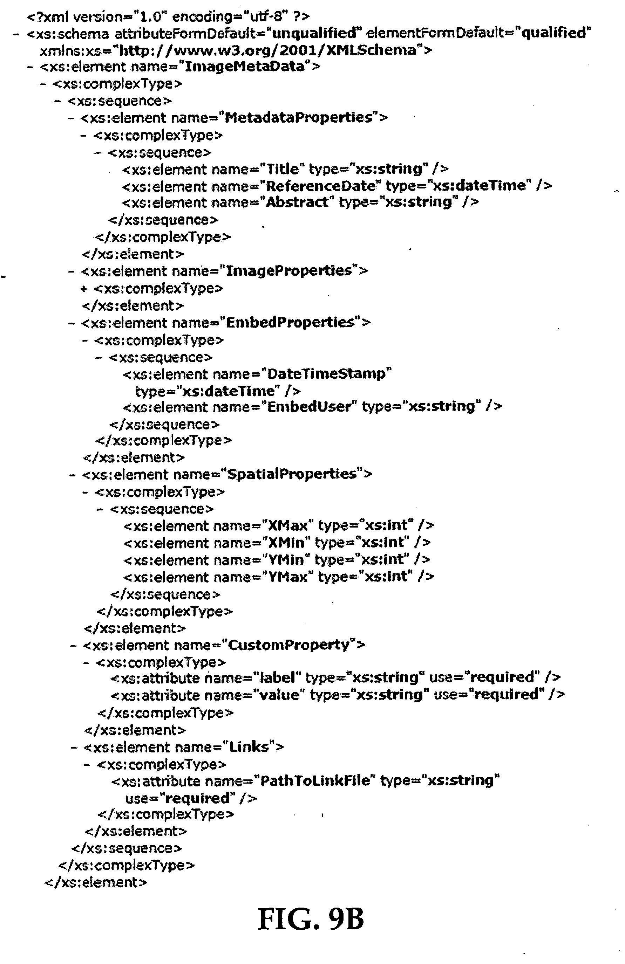

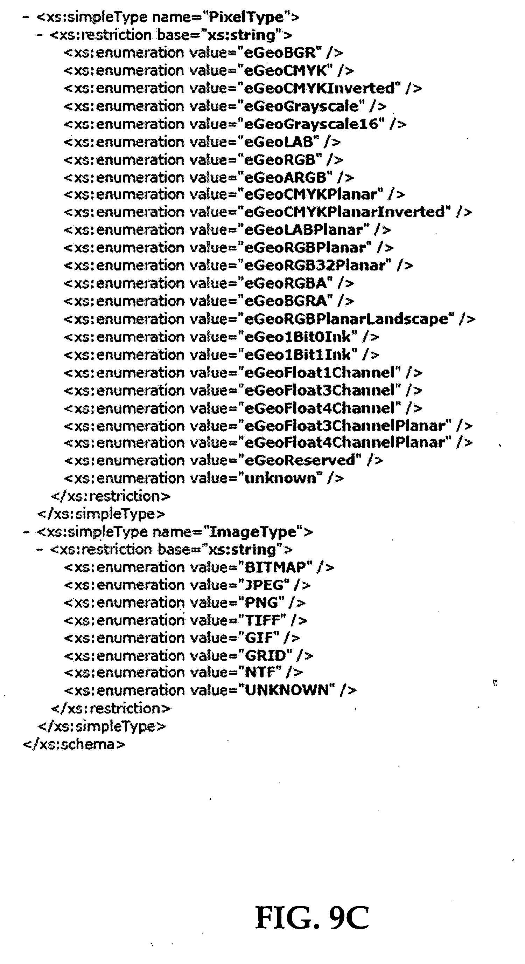

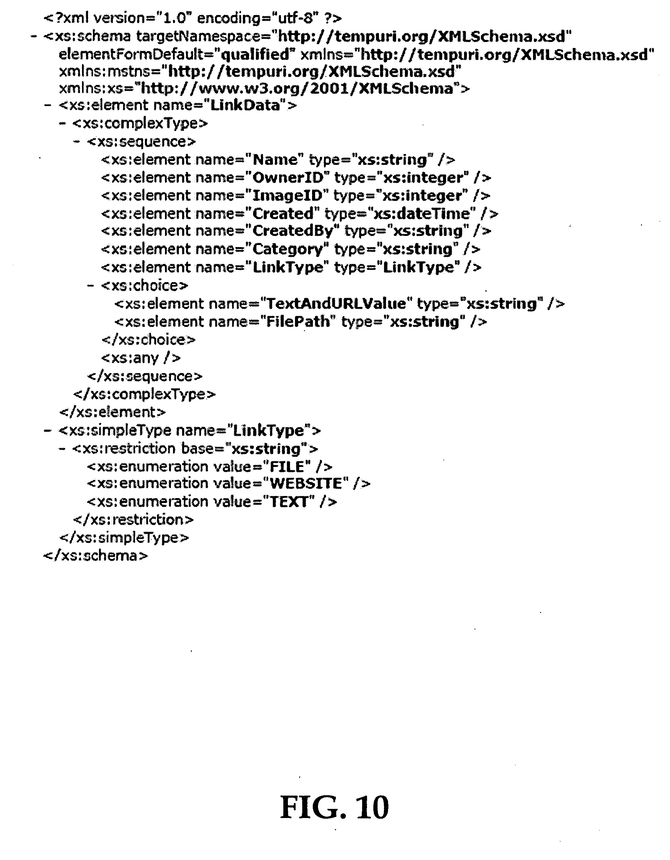

FIG. 4 illustrates the signal flow options through an example watermark registry database service (400). This service takes registry metadata (e.g., image metadata such as illustrated by the example XML files of FIGS. 9B - 9C) and reference links (e.g., link metadata such as illustrated by the example XML file of FIG. 10) and stores or updates them into the registry (e.g., see the example schema for the registry as illustrated by FIG. 9A). New data (103) is input to a record creation and storage process (401) that inserts this new information into the database. Data updates (108) are input to a record update process (402). Either process can also output database records (404 and 405) to an optional scripted data replication and filtering process (410) which follows rules to select data for output (406) to other watermark registry services. Query connections to the database (107) can be made to request and receive registry data through a data retrieval process (403).

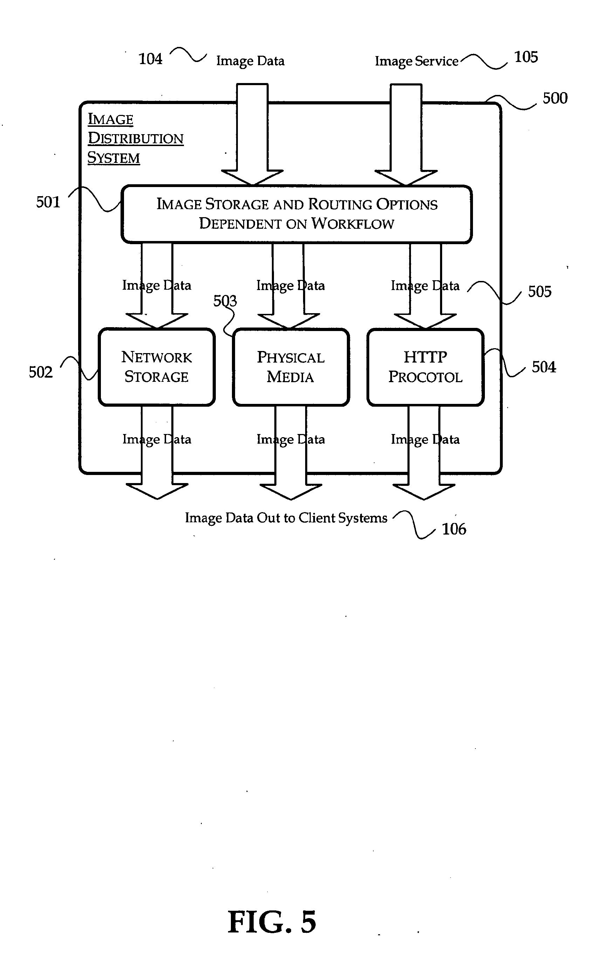

FIG. 5 illustrates the signal flow options through an example image distribution system (500). Image data (still images, video, elevations models, etc.) (104) and Image services (105) are distributed to users through different routing options (501) which can include network storage and dissemination processes (502), physical media distribution (503), HTTP protocol services (504) or any other means of digital data handling. Output data (106) is routed to client systems (600).

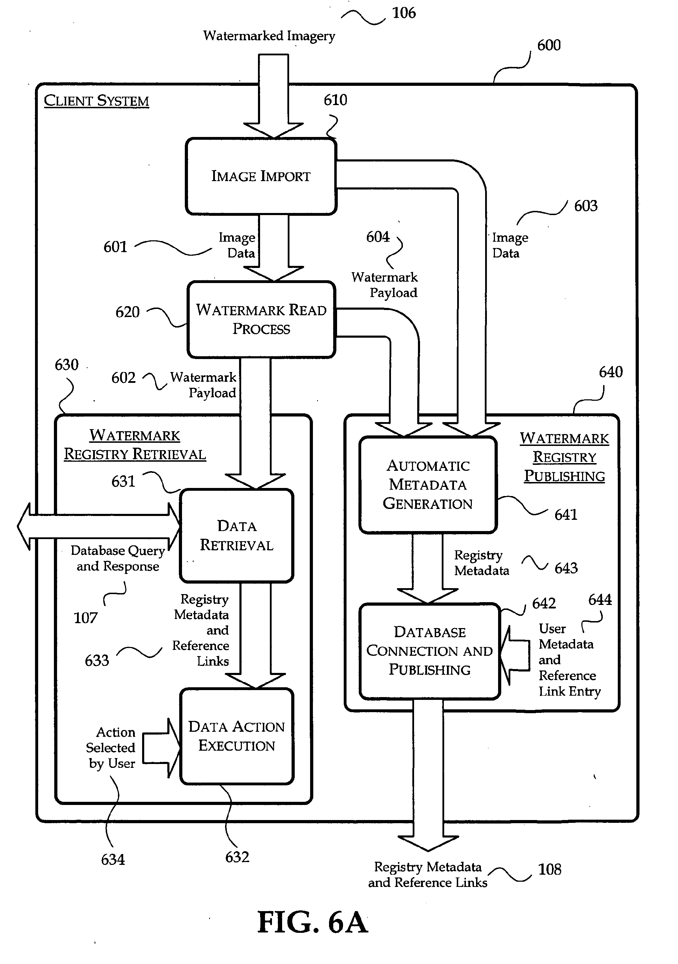

FIG. 6A describes an example signal flow through a client system (600). In this case, watermarked imagery (106) is retrieved from the distribution system (500) by an image import process (610). This image data (601) is passed to a watermark read process (620) .The read process (620) discovers the watermark payload and distributes it to the watermark registry retrieval block (630) where a data retrieval process (631) communicates with a watermark registry database (400) through a query and response mechanism (107) to retrieve related information. These metadata and reference links (633) are passed to a data action execution process (632) which presents options to a user for selection (634) and performs the selected action. For example, registry retrieval might result in obtaining location registration data for an image, and the action might be to allow the image to be automatically registered to ground coordinates using the data. An optional watermark registry publishing process (640) takes image data (603) from the image import process (610) and combines it with payload data (604) from the watermark read process (620) into an automatic metadata generation process (641). This process outputs formatted metadata (643) to a database connection and publishing process (642), which takes additional metadata and reference links from user input (644) and publishes the metadata and reference links (108) to the watermark registry (400).

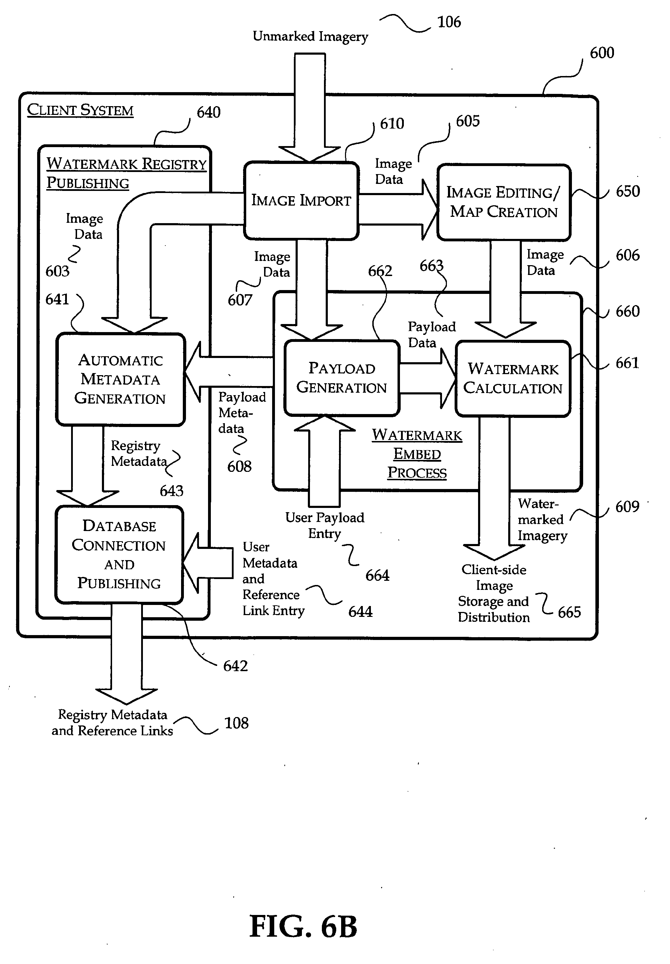

FIG. 6B describes an example signal flow through a client system (600). In this case, unmarked imagery (106) is retrieved from the distribution system (500) by an image import process (610). This image data (605) is passed to an optional image editing and map creation process (650) which passes output data to a watermark embed block (660). Within this block, a payload generation process (662) takes image metadata (607) from the image import process (610) and user specified data from user interaction (664). The output payload is fed to a watermark calculation process (661) that embeds a watermark in the image and sends watermarked imagery (609) out for client-side image storage and distribution. An optional watermark registry publishing process (640) takes image data (603) from the image import process (610) and combines it with payload data (608) from the watermark embed process (660) into an automatic metadata generation process (641). This process outputs formatted metadata (643) to a database connection and publishing process (642), which takes additional metadata and reference links from user input (644) and publishes the metadata and reference links (108) to the watermark registry (400).

For the example embodiment, the image capture device is listed as a digital imaging device (210) which is used to capture the image (101) and output it as a digital image (201); however, the image capture device (210) could include an analog imaging device with an analog to digital converter (ADC). The imaging device can operate on still images or video or other raster data layer such as digital elevation models (DEM) or thermal imaging.

The on-board watermark embedding process (220) can operate as either a software or hardware-based solution. In the case of a software solution, the software (221 and 222) could be loaded on a stand-alone PC or an embedded processor or a hand-held device, or any other processor convenient to the imaging platform. In the case of a hardware-based solution, the algorithm could be ported to any appropriate processing device including but not limited to a digital signal processor (DSP), a field programmable gate array (FPGA), or an application specific integrated circuit (ASIC) that is arranged to apply a digital watermarking process (221 and 222).

Although the ground station and processing center in FIG 3A through 3C are illustrated as a single block (300), some example embodiments may separate these functions into separate locations, and some may have more than one processing center for handling different image processing operations and/or different source locations.

### Example Process Flow

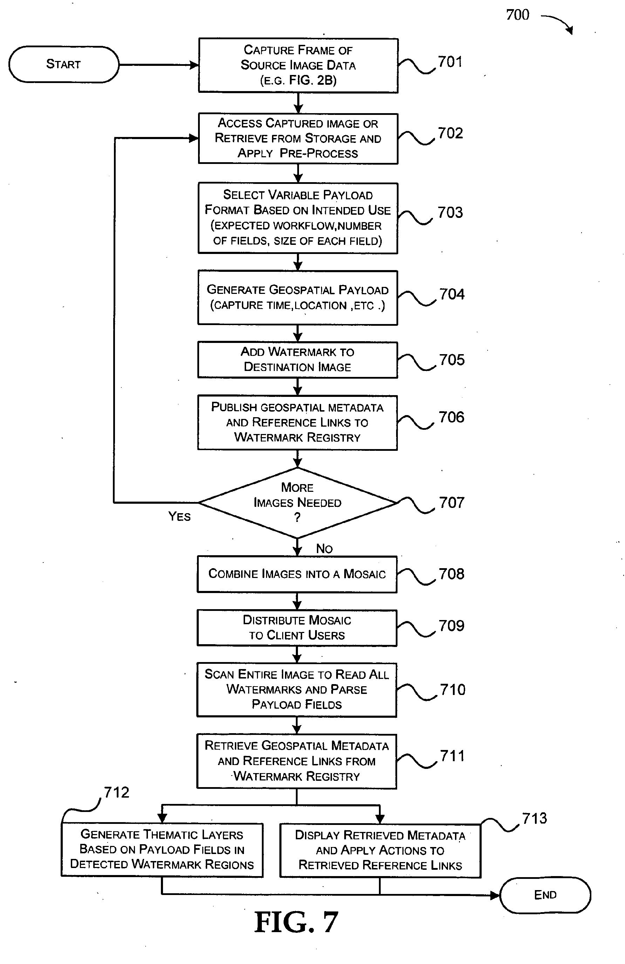

FIG. 7 is a process flow diagram (700) illustrating a geospatial digital watermarking workflow that is arranged in accordance with at least some aspects of the present disclosure. Process flow diagram 700 includes processing blocks 701 - 713.

At processing block 701, a source image frame is captured such as from an image capture device illustrated in FIG. 2B. Proceeding to block 702, the source image is pre-processed as illustrated in FIG. 3B to prepare the image for downstream processes like mosaicing. In other cases, the image could be retrieved from internal storage at an image processing center. These processes could include orthorectification, radiometric balancing, or other processes. Continuing to block 703, a process is applied to determine the type and format of payload to use in the image (also called the payload definition). This process can be dependent on system configuration settings, environmental settings, the amount of metadata available and other parameters. Proceeding to block 704, metadata from the platform is combined with timestamps, flags and unique identifiers to define the payload contents and format them according to the selected payload definition. In block 705, this payload is used to calculate the watermark and apply it to the image, creating a watermarked output image. Continuing to block 706, related metadata and reference links are organized and published to one or more watermark registry databases as illustrated in FIG. 4. Metadata can include geospatial metadata, image metadata, time and date stamps, data about the watermarking process, and many other types of metadata. Reference links can include but are not limited to links to documents, annotations, websites, geospatial data, and web services. At decision block 707, the process determines if additional images are required to complete desired scene. These images might contain adjacent areas to complete a scene that is larger than one image, or they might fill in areas within a given image that were obscured, for example, by clouds. When additional images are to be processed, processing flows from decision block 707 to block 702. Otherwise, processing continues from decision block 707 to block 708, where all selected images are combined into a mosaic. Since each original image was watermarked with payload data specific to that image, the resulting mosaic will contain a number of watermarks where each mark carries the relevant data for that pixel region. In addition, each watermark will contain unique identifiers that can be used to retrieve watermark registry metadata and reference links that relate to that pixel region. Proceeding to block 709, the resulting mosaic image is distributed to client systems as illustrated in FIG. 6A through an image distribution system as illustrated in figure 5. Proceeding to block 710, the client system can scan the image to read all watermarks and parse each watermark to identify the type of watermark found and the field values for that mark. Continuing to block 711, the unique identifiers in each watermark can be used to retrieve a list of related records form the watermark registry database. This list may contain metadata about each image as well as reference links to, for example, related data, documents, websites, or services. From this point, process flow will progress to either to block 712 or block 713 depending on user input. In block 712, the user can select from options to generate thematic layers from the payload information. Using the results of the scan process, the pixel regions for each unique watermark will be color coded based on payload field values and user selections. In block 713, a user of the client system may display metadata related to the image or select from a set of actions to be performed for each reference link.

Although the invention has been described herein by way of exemplary embodiments, variations in the structures and methods described herein may be made without departing from the spirit and scope of the invention. For example, the positioning and/or sizing of the various components may be varied. Individual components and arrangements of components may be substituted as known to the art. Since many embodiments of the invention can be made without departing from the spirit and scope of the invention, the invention is not limited except as by the appended claims.

## Claims

1. A method for a geographic information system to process source image data associated with geospatial information to generate and manage digitally watermarked image data, the method comprising:
capturing the source image data with an image capture platform;
generating geospatial metadata with the image capture platform based on the geospatial information associated with the source image data;
formatting the geospatial metadata into a variable payload with the image capture platform;
digitally watermarking the source image data with the variable payload to generate digitally watermarked image data with the image capture platform; and
transmitting the digitally watermarked image data and the geospatial metadata from the image capture platform to an image processing center, wherein the image processing center is arranged to: extract the variable payload from digitally watermarked image data, process the metadata, and publish metadata and links to additional data in association with the digitally watermarked image data in a watermark registry database such that one or more client applications can access the database.

2. The method of claim 1, further comprising:
receiving the digitally watermarked image data from the image capture platform with the image processing center;
receiving the geospatial metadata from the image capture platform with the image processing center, wherein the geospatial metadata is based on the geospatial information associated with the digitally watermarked image data;
extracting the variable payload from the digitally watermarked image data with the image processing center;
generating scripted metadata and links to additional data with the image processing center, based on the geospatial metadata and the variable payload;
publishing the scripted metadata and links to additional data in association with the digitally watermarked image data in a watermark registry database such that one or more client applications can access the database; and
transmitting the digitally watermarked image data from the image processing center to a client system through a distribution system, wherein the client system is arranged to: extract the variable payload from digitally watermarked image data, retrieve the scripted metadata and links to additional data in association with the digitally watermarked image data, and execute an operation selected by a user based on either the metadata or the links to additional data.

3. The method of claim 2, the variable payload comprising:
a creator identifier that is arranged to uniquely identify a source associated with the digitally watermarked image data;
an image identifier that is arranged to uniquely identify the digitally watermarked image data in association with the creator identifier; and
a time stamp that includes at least one member of a group comprising: an image capture time stamp, a digital watermarking time stamp, an elapsed time for a service, and a user defined time stamp.

4. The method of claim 2, the variable payload comprising:
a creator identifier that is arranged to uniquely identify a source associated with the digitally watermarked image data;
an image identifier that is arranged to uniquely identify the digitally watermarked image data in association with the creator identifier; and
a custom owner flag that includes at least one member of a group comprising: an classification type, a license identifier, a band type, and an original resolution associated with the digitally watermarked image data.

5. The method of claim 2, the variable payload comprising:
a creator identifier that is arranged to uniquely identify a source associated with the digitally watermarked image data; and
an image identifier that is arranged to uniquely identify the digitally watermarked image data in association with the creator identifier, wherein the variable payload includes field definitions that are stored in the watermarked registry database and indexed by at least one member of the group comprising the creator identifier and the image identifier such that the field definitions can be retrieved from the watermarked registry database.

6. A method for a geographic information system to process source image data associated with geospatial information to generate and manage digitally watermarked destination image data, the method comprising:
receiving the source image data from an image capture platform with the image processing center;
receiving geospatial metadata from the image capture platform with the image processing center, wherein the geospatial metadata is based on the geospatial information associated with the source image data;
formatting the geospatial metadata into a variable payload with the image processing center;
digitally watermarking the source image data with the variable payload to generate digitally watermarked image data with the image processing center;
generating scripted metadata and links to additional data with the image processing center, based on the received geospatial metadata and the variable payload;
publishing the scripted metadata and links to additional data in association with the digitally watermarked image data in a watermark registry database such that one or more client applications can access the database; and
transmitting the digitally watermarked image data from the image processing center to a client system through a distribution system, wherein the client system is arranged to: extract the variable payload from digitally watermarked image data, retrieve the scripted metadata and links to additional data in association with the digitally watermarked image data, and execute an operation selected by a user based on either the metadata or the links to additional data.

7. The method of claim 6, further comprising:
receiving the digitally watermarked destination image data with the client system from the distribution system;
extracting the watermark payload from the digitally watermarked destination image data with the client system;
retrieving registry metadata and links to additional data associated with the digitally watermarked image data from the watermark registry database based on the extracted watermark payload with the client system; and
executing an operation with the client system, wherein the operation is selected by a user based on either the metadata or the links to additional data.

8. The method of claim 7, further comprising:
retrieving user restriction information from the watermark registry database with the client system, wherein the user privilege is determined by the watermark registry database based on a creator identifier contained in the extracted watermark payload and a user identifier sent from the client system; and
restricting the user from accessing one or more portions of the digitally watermarked destination image data with the client system based on the retrieved user restriction information.

9. The method of claim 7, further comprising querying the watermark registry database to determine field definitions in the watermark payload based on a creator identifier contained in the watermark payload.

10. The method of claim 6, further comprising:
receiving the scripted geospatial metadata and links to additional data with the watermark registry database from the image processing center;
storing the scripted geospatial metadata in an image data record, the image data record comprising:
a creator identifier field that is arranged to uniquely identify a source associated with the digitally watermarked image data,
an image identifier field that is arranged to uniquely identify the digitally watermarked image data associated with the creator identifier, and
a geospatial metadata properties field;
storing the links to additional data in a link data record, wherein the link data record is associated with the image data record through the link data record; and
providing information contained in the image data record and the link data record to a user upon the user's request.

11. The method of claim 10, the image data record further comprising:
an image properties field including at least one member of a group comprising: width, height, band count, resolution, pixel type, and image type;
a watermark embedding properties field including either a time stamp of watermark embedding or a user embedding the watermark,
and a custom properties field containing user defined information associated with the digitally watermarked image data.

12. The method of claim 10, the link data record comprising:
a link key field that is arranged to uniquely identifying the link data record,
an image identifier field that is arranged to uniquely identify the digitally watermarked image data associated with the creator of the digitally watermarked image data, and
a data field containing additional data associated with the digitally watermarked image data.

13. The method of claim 10, wherein providing information further comprises:
receiving a data query from a user,
identifying a permission associated with the user,
and retrieving data information for either the image data record or the link data record in response to the data query based on the identified permission associated with the user.

14. The method of claim 13, wherein the data query from the user comprises:
a creator identifier uniquely identifying a source associated with the digitally watermarked image data, and an image identifier uniquely identifying a digital watermarked image data associated with the creator identifier.

15. The method of claim 10, wherein the watermark registry database is one of a plurality of distributed databases such that the scripted geospatial metadata and links to additional data are stored in more than one of the distributed databases, wherein the scripted geospatial metadata and links to additional data are replicated with the watermark registry database to other distributed databases.

16. The method of claim 6, the links to additional data comprising: links to a web service, wherein the web service is arranged to take parameters drawn from the variable payload to provide either spatial data or non-spatial data.

17. The method of claim 6, further comprising:
accessing each of a plurality of captured images with the image processing center;
selecting a variable payload format for each accessed captured image with the image processing center based on an intended use for the accessed image;
generating a variable payload with the image processing center based on geospatial metadata associated with each accessed image;
digitally watermarking each accessed image with the variable payload to generate digitally watermarked image data with the image processing center;
publishing the metadata and links to additional data in association with each digitally watermarked image in a watermark registry database such that one or more client applications can access the database;
combining digitally watermarked images into a mosaic image; and
transmitting the mosaic image from the image processing center to a client system through a distribution system, wherein the client system is arranged to: scan entire mosaic image to extract variable payloads, retrieve the metadata and links to additional data in association with each digitally watermarked region of the mosaic image, generate thematic layers based on payload fields in detected watermark regions, and execute an operation selected by a user based on either the metadata or the links to additional data.

18. The method of claim 6, wherein digitally watermarking the source image data with the variable payload further comprises: embedding multiple digital watermarks, each with a corresponding one of multiple resolution levels, in the source image data to generate digitally watermarked image data with the image processing center, such that the digital watermark is retained when the digitally watermarked image data is either converted to a lower resolution or when portions of the image are cropped.

19. The method of claim 7, further comprising:
determining whether the digital watermark for the digitally watermarked destination image data has been changed or reoriented with the client system;
retrieving orientation data with the client system when the orientation of the digitally watermarked destination image data has been determined to have changed or reoriented;
extracting the watermark payload from the digitally watermarked destination image data with the client system; and
determining spatial alterations that have been performed on the digitally watermarked destination image data so that related geospatial metadata can be recalculated for use with the digitally watermarked destination image data.

20. A method for a geographic information system to process source image data associated with geospatial information to generate watermarked image data, the method comprising:
receiving the source image data from a distribution system with a client system;
extracting geospatial metadata from the source image data with the client system;
receiving user specified data from a user with the client system;
formatting the geospatial metadata and the user specified data into a payload with the client system;
digitally watermarking the source image data with the payload to generate digitally watermarked image data with the client system;
generating registry metadata from the digitally watermarked image data and the payload with the client system;
publishing the registry metadata in a watermark registry database with the client system; and
transmitting the digitally watermarked image data for client-side image storage and distribution.

21. The method of claim 20, further comprising:
determining whether the digital watermark for the digitally watermarked destination image data has been changed or reoriented with the client system;
retrieving orientation data with the client system when the orientation of the digitally watermarked destination image data has been determined to have changed or reoriented;
extracting the watermark payload from the digitally watermarked destination image data with the client system; and
determining spatial alterations that have been performed on the digitally watermarked destination image data so that related geospatial metadata can be recalculated for use with the digitally watermarked destination image data.
